# EUROPÄISCHE PATENTSCHRIFT

(11) **EP 1 069 966 B1**
(45) Veröffentlichungstag und Bekanntmachung des Hinweises auf die Patenterteilung: **29.05.2002**
(21) Anmeldenummer: 99914464.5
(22) Anmeldetag: 02.03.1999
(51) Int. Cl.: B23K 11/16

(54) **VERFAHREN ZUM VERSCHWEISSEN EINES DOPPELLAGENBLECHES MIT EINEM FÜGEBLECH**
METHOD FOR WELDING A DOUBLE LAYER SHEET TO A JOINTING SHEET
PROCEDE POUR SOUDER UNE TOLE DOUBLE COUCHE AVEC UNE TOLE DE JOINTOIEMENT

(30) Priorität: 07.04.1998 DE 19815476
(43) Veröffentlichungstag der Anmeldung: 24.01.2001
(73) Patentinhaber: ThyssenKrupp Stahl AG, 47166 Duisburg (DE)
(72) Erfinder: GALL, Hans-Dieter, D-47178 Duisburg (DE)
(74) Vertreter: Cohausz & Florack
(86) Internationale Anmeldenummer: EP9901343
(87) Internationale Veröffentlichungsnummer: WO9951383

(56) Entgegenhaltungen:
- DE-A- 19 503 166
- PATENT ABSTRACTS OF JAPAN vol. 018, no. 404 (M-1646), 28. Juli 1994 -& JP 06 115687 A (SHINDENGEN ELECTRIC MFG CO LTD), 26. April 1994
- PATENT ABSTRACTS OF JAPAN vol. 018, no. 633 (M-1714), 2. Dezember 1994 -& JP 06 246462 A (KAWASAKI STEEL CORP), 6. September 1994
- PATENT ABSTRACTS OF JAPAN vol. 010, no. 070 (M-462), 19. März 1986 -& JP 60 213370 A (MITSUBISHI JIDOSHA KOGYO KK), 25. Oktober 1985
- PATENT ABSTRACTS OF JAPAN vol. 013, no. 060 (M-796), 10. Februar 1989 -& JP 63 264279 A (NKK CORP), 1. November 1988
- PATENT ABSTRACTS OF JAPAN Bd. 010, Nr. 301 (M-525) 14 Oktober 1986 & JP 61 115 687 A (KOBE STEEL LTD) 03 Juni 1986

## Beschreibung

Die Erfindung betrifft ein Verfahren zum Verschweißen eines Doppellagenbleches, bestehend aus zwei Deckblechen und einer Zwischenlage aus brennbarem Material, insbesondere aus imprägniertem Papier, mit einem Fügeblech durch Widerstands- oder Widerstandsrollennahtschweißen, wobei das erste Deckblech an dem Fügeblech anliegt und zum Verschweißen jeweils die eine von einander gegenüberliegenden Schweißelektroden das zweite Deckblech und die andere Schweißelektrode das Fügeblech kontaktieren, so daß der Strom zwischen den Schweißelektroden zunächst über das zweite Deckblech, mindestens einen neben der Schweißstelle liegenden Nebenschluß, das erste Deckblech und das Fügeblech fließt, dabei die Zwischenlage erwärmt und im Bereich der Schweißstelle entfernt wird und anschließend die Deckbleche bei unmittelbarer Kontaktierung zusammen mit dem Fügeblech miteinander verschweißt werden.

Doppellagenbleche sind in verschiedenen Ausführungen bekannt. Bei einem bekannten Verfahren zur Herstellung eines Doppellagenbleches der vorgenannten Art (Patent Abstracts of Japan vol. 013, no. 060(M-796), 10. Februar 1989 und JP 63 264279 A; und Patent Abstracts of Japan vol. 10, no. 301 (M-525), 3.Juni 1986 und JP 61 115687 A) werden das eine Deckblech und das Fügeblech von zwei gleich großen, auf den Bereich der Schweißstelle beschränkten Elektroden kontaktiert. Der Nebenschluß wird von einer äußeren Brücke gebildet, die weit außerhalb der Schweißstelle das eine Deckblech und das Fügeblech kontaktiert. Um zu verhindern, daß beim Anlegen einer Spannung die Stromdichte an den verhältnismäßig kleinen Kontaktstellen der Schweißelektroden zu groß wird, ist beim erstgenannten Stand der Technik vorgesehen, daß der Stromfluß durch Steuerung der anliegenden Spannung derart beeinflußt wird, daß zunächst ein Strom niedriger Stromstärke fließt, der zum Aufschmelzen der aus Harz bestehenden Zwischenlage führt. Sobald über die mit Klemmkraft auf das eine Deckblech und das Fügeblech einwirkenden Schweißelektroden die beiden Deckbleche unter Verdrängung der aufgeschmolzenen Zwischenlage kontaktiert haben, was an einer Änderung der anliegenden Spannung erkennbar ist, kann der Strom zwischen den Elektroden unmittelbar über die Deckbleche und das Fügeblech fließen. Von diesem Zeitpunkt an wird der Strom auf die benötigte Schweißstromstärke erhöht und die Schweißverbindung zwischen dem Fügeblech und den Deckblechen hergestellt. Dieses Verfahren macht es also erforderlich, während des Fügeprozesses Strom und Spannung zu steuern

Bei einem bekannten Doppellagenblech (DE 195 03 166 A1), von dem mindestens ein Deckblech Noppen aufweist, sind die beiden Deckbleche an den Stirnseiten der Noppen miteinander verschweißt, wobei allerdings nicht alle Noppen mit dem anderen Deckblech verschweißt sein müssen. Solche Doppellagenbleche zeichnen sich durch ein hohes Flächenträgheitsmoment bei verhältnismäßig kleinem Flächengewicht aus. Wegen dieser Eigenschaft sind sie prädestiniert dafür, in Kraftfahrzeugen eingesetzt zu werden.

Ferner ist es bekannt, den Hohlraum zwischen den beiden Deckblechen durch Füllmaterial auszufüllen. Dieses Füllmaterial kann versteifend und geräuschdämmend wirken. Die Herstellung eines solchen Doppellagenbleches mit einer Zwischenlage erfolgt in der Weise, daß die Zwischenlage als Lochmatte auf das genoppte Blech derart aufgelegt wird, daß die Stirnseiten der Noppen einer freiliegen. So lassen sich nach Auflegen des anderen Deckbleches die beiden Deckbleche problemlos an den unmittelbar zu kontaktierenden Stirnseiten der Noppen durch Widerstandsschweißen miteinander verschweißen.

Problematisch ist dagegen das Verschweißen eines solchen Doppellagenbleches mit einem Fügeblech durch Widerstandsschweißen wegen der isolierenden Zwischenlage. Zwar ist ein Verschweißen des Fügebleches mit dem Doppellagenblech im Bereich der Stirnseiten der Noppen problemlos möglich, nicht jedoch an Stellen, wo sich zwischen den beiden Deckblechen die isolierende Zwischenlage befindet. Schweißversuche an Doppellagenblechen mit Deckblechen von 0,2 bis 0,4 mm Dicke mittels herkömmlichen, kugelige Kontaktflächen aufweisenden Schweißelektroden, von denen die eine Schweißelektrode unmittelbar auf das Noppenblech und die andere Schweißelektrode mittelbar über das Fügeblech mit dem Noppenblech kontaktiert wird, haben ergeben, daß es zum insbesondere ringförmigen Durchbrennen des durch die Schweißelektrode unmittelbar kontaktierten Noppenbleches kommt. Eine hochfeste Verbindung des Fügebleches mit beiden Deckblechen des Doppellagenbleches läßt sich deshalb nicht erreichen.

Der Erfindung liegt die Aufgabe zugrunde, ein Verfahren zu entwickeln, das gewährleistet, daß ein Fügeblech mit beiden Deckblechen eines eine isolierende Zwischenlage aufweisenden Doppellagenbleches durch Widerstandsschweißen verbunden wird.

Diese Aufgabe wird bei einem Verfahren der eingangs genannten Art dadurch gelöst, daß die eine Schweißelektrode das zweite Deckblech mit einer mindestens 10-fach größeren Fläche als die Querschnittsfläche einer Schweißstelle kontaktiert, daß der fließende Strom die Zwischenlage im Bereich der Schweißstelle durch kontrollierte Aufheizung der Deckbleche, ohne sie aufzuschmelzen, verbrennt, und daß nach erfolgtem Freibrennen der Schweißstelle beide Deckbleche durch gezielte örtliche Druckbeaufschlagung mit dem Fügeblech in elektrisch leitende Berührung gebracht und gemeinsam mit diesem verschweißt werden.

Mit dem erfindungsgemäßen Verfahren erhält man eine Verschweißung des Fügebleches mit beiden Deckblechen, weil beim Aufsetzen der Schweißelektroden wegen der sehr großen Kontaktfläche der einen Schweißelektrode eine zu große Stromdichte und damit eine Überhitzung der Deckbleche an der Schweißstelle vermieden wird, ohne daß es nötig ist, den in den einzelnen Phasen des Verfahrens fließenden Strom zu begrenzen. Der in den Deckblechen fließende Strom verteilt sich auf eine große Querschnittsfläche und führt zunächst nur dazu, daß die für die Verschweißung störende isolierende Zwischenlage zumindest in der unmittelbaren Umgebung des Schweißortes weggebrannt wird. Erst danach kommt es zu einem unmittelbaren Kontakt der Deckbleche am Schweißort. Dann besteht nicht mehr die Gefahr eines Durchbrennens oder ringförmigen Ausbrennens an der Kontaktstelle des Deckbleches zur Schweißelektrode. Ein ausreichend großer Stromfluß zum Wegbrennen wird über den Nebenschluß ermöglicht. Bei einem Noppenblech können es die miteinander verschweißten Noppen sein. Bei einem Doppellagenblech ohne solche kontaktgebenden Noppen kann eine künstliche Kontaktbrücke zwischen den beiden Doppellagenblechen hergestellt werden.

Um eine zu große Stromdichte beim Aufsetzen der Schweißelektroden zu vermeiden, gibt es mehrere Möglichkeiten. Nach einer ersten Alternative ist vorgesehen, daß für die großflächige Kontaktierung durch die eine Schweißelektrode eine plattenförmige Schweißelektrode oder eine ringförmige Schweißelektrode mit einem mittigen Stützzapfen verwendet wird. Nach einer zweiten alternativen Lösung ist vorgesehen, daß ein verlorenes Blechstück zwischen der Schweißelektrode und dem Deckblech verwendet wird, das mitverschweißt wird. Ein solches verlorenes Blechstück ist auch insofern von Vorteil, als es verstärkend wirkt.

Um nach Verbrennen der Zwischenlage den unmittelbaren Kontakt der Deckbleche sicherzustellen, ist nach einer Ausgestaltung der Erfindung vorgesehen, daß für die andere Schweißelektrode eine Schweißelektrode mit einer kugeligen Kontaktfläche verwendet wird. Bei Druckbeaufschlagung drückt die Schweißelektrode mit der kugeligen Kontaktfläche über das Fügeblech das Deckblech in den Hohlraum des Doppellagenbleches hinein und bringt es in Kontakt mit dem anderen Deckblech.

Im folgenden wird die Erfindung anhand einer ein Ausführungsbeispiel darstellenden Zeichnung näher erläutert. Im einzelnen zeigen:
- Figur 1: ein zwischen zwei Schweißelektroden angeordnetes Doppellagenblech und Fügeblech im Augenblick des Kontaktierens im Axialschnitt in schematischer Darstellung,
- Figur 2: das Doppellagenblech und das Fügeblech gemäß Figur 1 nach dem Verschweißen
und
- Figur 3: ein Doppellagenblech mit Fügeblech und einem verlorenen Blechstück nach dem Verschweißen in isometrischer Darstellung.

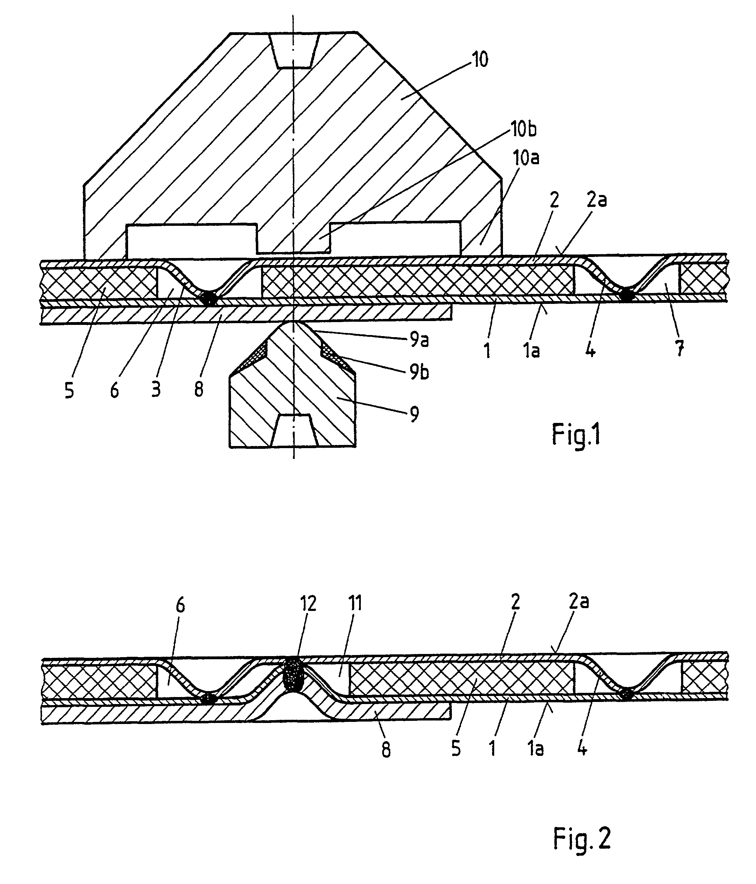

Ein in Figur 1 dargestelltes Doppellagenblech besteht aus zwei Deckblechen 1,2 aus Stahl mit einer charakteristischen Dicke von 0,2 bis 0,4 mm. Das in der Zeichnung dargestellte untere Deckblech 1 ist flach, während das obere Deckblech 2 mit Noppen 3,4 versehen ist. Die beiden Deckbleche 1,2 sind an den Stirnseiten der Noppen 3,4 miteinander verschweißt. Zwischen beiden Deckblechen 1,2 befindet sich eine Zwischenlage 5 aus imprägniertem Papier in Form einer gelochten Matte. Die Löcher 6,7 in der Zwischenlage 5 korrespondieren mit den Noppen 3,4, so daß beim Verschweißen der beiden Deckbleche 1,2 diese sich an den Stirnseiten der Noppen 3,4 unmittelbar berühren. Bei einer üblichen Noppentiefe von knapp 2 mm und Blechdicken von 0,2 bis 0,4 mm ergibt sich somit ein Doppellagenblech von rund 2 mm Gesamtdicke.

Bei einem solchen Doppellagenblech 1-7 gilt es, ein Fügeblech 8 aus Stahl mit einer charakteristischen Dicke zwischen 0,5 und 1 mm durch Widerstandsschweißen, und zwar durch Punkt- oder Rollnahtschweißen, mit dem Doppellagenblech 1,2 zu verbinden. Zum Verschweißen wird das Fügeblech 8 flach an die äußere Seite 1a des ebenen Deckbleches 1 angelegt, wie Figur 1 zeigt. Dann werden Schweißelektroden 9,10 von beiden Seiten angesetzt. Wie zu erkennen ist, liegen die Achsen der Schweißelektroden 9,10 im Bereich der isolierenden Zwischenlage 5 und nicht im Bereich eines Noppens 3,4.

Während die untere Schweißelektrode 9 eine kugelige Kontaktfläche 9a mit einem um diese kugelige Kontaktfläche 9a gelegten Keramikring oder PTFE-Ring 9b aufweist, der im Falle von verzinkten Blechen eine ringförmige Zinkbildung am Fügeblechkrater verhindern soll, ist die obere Schweißelektrode 10 als Ringelektrode ausgebildet. Sie weist einen Kontaktring 10a und einen mittigen Stützzapfen 10b auf, der etwas zurückversetzt ist, so daß er beim Aufsetzen der Schweißelektrode 10 auf die äußere Seite 2a des genoppten Deckbleches 2 im Gegensatz zu dem Ringkontakt 10a noch nicht kontaktiert. Sobald nun bei dieser Konstellation Strom zugeführt wird, verteilt sich dieser Strom großflächig in den Deckblechen 1,2, wobei die miteinander verschweißten Bereiche an den Noppen 3,4 einen Nebenschluß bilden. Bei einer solchen Kontaktgabe und Stromeinleitung in das Doppellagenblech 1-7 kommt es wegen der besonders hohen Stromdichte in der unmittelbaren Umgebung der unteren Schweißelektrode 9 und damit auch im Bereich 11 der späteren Schweißstelle 12 zu einer starken Aufheizung der Deckbleche 1,2, die zwar zum Verbrennen der isolierenden Zwischenlage 5 in diesem Bereich 11 der Schweißstelle 12 führt, die aber nicht so groß ist, daß es zum Aufschmelzen/Wegschmelzen, zum Beispiel des oberen Deckbleches 2, in diesem Bereich kommt. Da die Schweißelektroden 9,10 mit Druck beaufschlagt werden und die Druckbeaufschlagung andauert, drückt die untere Schweißelektrode 9 mit ihrer kugeligen Kontaktfläche das Fügeblech 8 und das untere Deckblech 1 in den durch das Wegbrennen der Zwischenlage 5 geschaffenen Freiraum ein, so daß das untere Deckblech 1 unmittelbar mit dem oberen Deckblech 2 kontaktiert wird. Dabei stützt der Stützzapfen 10b das obere Deckblech 2 ab. Im Endergebnis erhält man so eine Schweißverbindung zwischen dem Fügeblech 8 und dem Doppellagenblech, bei der beide Deckbleche 1,2 mit dem Fügeblech 8 verschweißt sind.

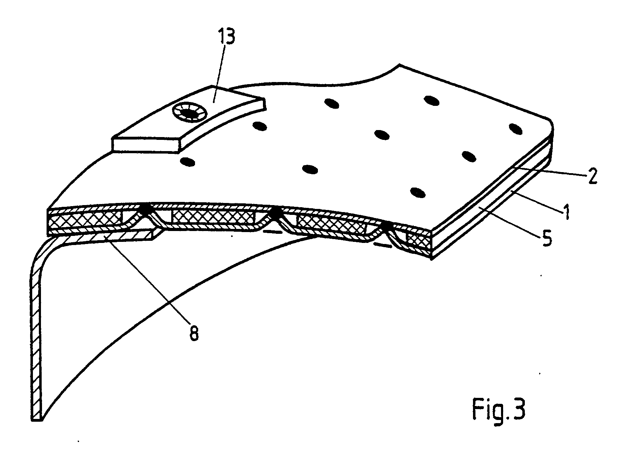

Beim Ausführungsbeispiel der Figur 3 ist anstelle der ringförmigen Schweißelektrode 10 ein verlorenes Blechstück 13 verwendet worden. In diesem Fall kann an dieses Blechstück 13 die gleiche Schweißelektrode wie die Schweißelektrode 9 beim Ausführungsbeispiel der Figur 1 angesetzt werden.

Sofern Doppellagenbleche ohne Noppen mit einem Fügeblech verschweißt werden sollen, dann kann ein künstlicher Nebenschluß dadurch hergestellt werden, daß seitlich neben der späteren Schweißstelle eine elektrische Brücke an das Fügeblech angeschlossen wird, die mit dem gegenüberliegenden Deckblech in Verbindung steht.

## Patentansprüche

1. Verfahren zum Verschweißen eines Doppellagenbleches (1,2,5), bestehend aus zwei Deckblechen (1,2) und einer Zwischenlage (5) aus brennbarem Material, insbesondere aus imprägniertem Papier, mit einem Fügeblech (8) durch Widerstands- oder Widerstandsrollennahtschweißen, wobei das erste Deckblech (1) an dem Fügeblech (8) anliegt und zum Verschweißen jeweils die eine von einander gegenüberliegenden Schweißelektroden (9,10) das zweite Deckblech (2) und die andere Schweißelektrode das Fügeblech (8) kontaktieren, so daß der Strom zwischen den Schweißelektroden (9,10) zunächst über das zweite Deckblech (2), mindestens einen neben der Schweißstelle (12) liegenden Nebenschluß (3,4), das erste Deckblech (1) und das Fügeblech (8) fließt, dabei die Zwischenlage erwärmt und im Bereich der Schweißstelle (12) entfernt wird und anschließend die Deckbleche (1,2) bei unmittelbarer Kontaktierung miteinander zusammen mit dem Fügeblech (8) verschweißt werden,
**dadurch gekennzeichnet, daß** die eine Schweißelektrode (10) das zweite Deckblech (2) mit einer mindestens 10-fach größeren Fläche als die Querschnittsfläche der Schweißstelle (12) kontaktiert, daß der fließende Strom die Zwischenlage (5) im Bereich (11) der Schweißstelle (12) durch kontrollierte Aufheizung der Deckbleche (1,2), ohne sie aufzuschmelzen, verbrennt, und daß nach erfolgtem Freibrennen der Schweißstelle beide Deckbleche durch gezielte örtliche Druckbeaufschlagung mit dem Fügeblech (8) in elektrisch leitende Berührung gebracht und gemeinsam mit diesem verschweißt werden.

2. Verfahren nach Anspruch 1,
**dadurch gekennzeichnet, daß** für die großflächige Kontaktierung durch die eine Schweißelektrode (10) eine plattenförmige Schweißelektrode oder ringförmige Schweißelektrode mit einem mittigen Stützzapfen (10b) verwendet wird.

3. Verfahren nach Anspruch 1,
**dadurch gekennzeichnet, daß** für die großflächige Kontaktierung durch die eine Schweißelektrode (10) ein verlorenes Blechstück (13) zwischen der Schweißelektrode und dem Deckblech (2) verwendet wird, das mitverschweißt wird.

4. Verfahren nach einem der Ansprüche 1 bis 3,
**dadurch gekennzeichnet, daß** für die andere Schweißelektrode (9) eine Schweißelektrode mit einer kugeligen Kontaktfläche (9a) verwendet wird.

5. Verfahren nach einem der Ansprüche 1 bis 4,
**dadurch gekennzeichnet, daß** für den Nebenschluß eine elektrische Brücke zwischen den Deckblechen (1,2) und/oder dem Blechstück (13) und/oder dem Fügeblech (8) verwendet wird.

6. Verfahren nach Anspruch 5,
**dadurch gekennzeichnet, daß** mindestens ein Deckblech (2) mit Noppen (3,4) verwendet wird, die mit ihren Spitzen an dem anderen Deckblech (1) angeschweißt sind und als Nebenschluß dienen.

## Claims

1. A method for welding a double layer sheet metal (1, 2, 5), comprised of two cover sheet metals (1,2) and an intermediate layer (5) of a combustible material, in particular, of impregnated paper, with a bonding sheet metal (8) by resistance or resistance roll seam welding, wherein the first cover sheet metal (1) rests against the bonding sheet metal (8) and one of the oppositely positioned welding electrodes (9, 10) contacts the second cover sheet metal (2) and the other one of the welding electrodes contacts the bonding sheet metal (8), respectively, for performing the welding process, so that the current between the welding electrodes (9, 10) first flows via the second cover sheet metal (2), at least one shunt (3, 4) positioned adjacent to the welding location (12), the first cover sheet metal (1), and the bonding sheet metal (8), so that thereby the intermediate layer is heated and removed in the area of the welding location (12) and, subsequently, the cover sheet metals (1, 2), with the bonding sheet metal (8), are welded together by directly contacting one another, **characterized in that** the one welding electrode (10) contacts the second cover sheet metal (2) with a surface area that is at least 10 times greater than the cross-sectional surface area of the welding location (12), that the flowing current burns off the intermediate layer (5) in the area (11) of the welding location (12) by controlled heating of the cover sheet metal (1, 2) without melting it, and that, after completion of burning free the welding location, both cover sheet metals are brought into electrically conducting contact with the bonding sheet metal (8) and are welded together with the latter.

2. The method according to claim 1, **characterized in that** for the large surface area contacting by the one welding electrode (10) a plate-shaped welding electrode or a ring-shaped welding electrode with a central support pin (10b is used.

3. The method according to claim 1, **characterized in that** for the large surface area contacting by the one welding electrode (10) a lost sheet metal piece (13) is used between the welding electrode and the cover sheet metal (2) which piece is also connected by welding.

4. The method according to one of the claims 1 through 3, **characterized in that** the other welding electrode (9) is a welding electrode with a spherical contact surface (9a).

5. The method according to one of the claims 1 through 4, **characterized in that** an electrical bridge between the cover sheet metals (1, 2) and/or the sheet metal piece (13) and/or the bonding sheet metal (8) is used as the shunt.

6. The method according to claim 5, **characterized in that** at least one cover sheet metal (2) with knobs (3, 4) is used which are welded with their tips to the other cover sheet metal (1) and act as a shunt.

## Revendications

1. Procédé de soudage d'une tôle à double couche (1, 2, 5), constitué de deux tôles de recouvrement (1, 2) et d'une couche intermédiaire (5) en matériau combustible, en particulier du papier imprégné, à une tôle de jonction (8) par soudage par résistance ou par soudage par résistance continue à la molette, la première tôle de recouvrement (1) s'appliquant sur la tôle de jonction (8) et, pour le soudage, respectivement la première des électrodes de soudage (9, 10) en regard l'une de l'autre venant en contact avec la deuxième tôle de recouvrement (2), tandis que l'autre électrode de soudage vient en contact avec la tôle de jonction (8), de telle sorte que le courant passant entre les électrodes de soudage (9, 10) s'écoule tout d'abord via la deuxième tôle de recouvrement (2), au moins une dérivation (3, 4) située à côté du point de soudage (12), la première tôle de recouvrement (1) et la tôle de jonction (8), la couche intermédiaire étant chauffée et éliminée dans la zone du point de soudage (12), et ensuite les tôles de recouvrement (1, 2) étant soudées l'une à l'autre conjointement avec la tôle de jonction (8) par mise en contact direct.
**caractérisé en ce que** la première électrode de soudage (10) est mise en contact avec la deuxième tôle de recouvrement (2) sur une surface d'au moins dix fois plus grande que la surface en coupe transversale du point de soudage (12), le courant qui s'écoule brûle la couche intermédiaire (5) dans la zone (11) du point de soudage (12) par chauffage contrôlé des tôles de recouvrement (1, 2) mais sans les faire fondre, et, après libération par combustion du point de soudage, les deux tôles de recouvrement sont amenées en contact conducteur de l'électricité avec la tôle de jonction (8) par une application locale appropriée de pression et sont soudées conjointement avec cette tôle.

2. Procédé selon la revendication 1, **caractérisé en ce que**, pour la mise en contact sur une grande surface, par la première électrode de soudage (10), on utilise une électrode de soudage en forme de plaque ou une électrode de soudage en forme d'anneau avec un tenon d'appui central (10b).

3. Procédé selon la revendication 1, **caractérisé en ce que**, pour la mise en contact sur une grande surface par la première électrode de soudage (10), on utilise entre l'électrode de soudage et la tôle de recouvrement (2) un fragment de tôle perdu (13) qui est soudé avec elles.

4. Procédé selon l'une quelconque des revendications 1 à 3, **caractérisé en ce que**, pour l'autre électrode de soudage (9), on utilise une électrode de soudage ayant une surface de contact sphérique (9a).

5. Procédé selon l'une quelconque des revendications 1 à 4, **caractérisé en ce que**, pour la dérivation, on utilise un pont électrique entre les tôles de recouvrement (1, 2) et/ou le fragment de tôle (13) et/ou la tôle de jonction (8).

6. Procédé selon la revendication 5, **caractérisé en ce qu'**on utilise au moins une tôle de jonction (2) pourvue de protubérances (3, 4), qui sont soudées à l'autre tôle de recouvrement (1) au niveau de leurs sommets et servent de dérivation.
